# EUROPÄISCHE PATENTSCHRIFT

(11) **EP 2 409 379 B1**
(45) Veröffentlichungstag und Bekanntmachung des Hinweises auf die Patenterteilung: **06.07.2016**
(21) Anmeldenummer: 10701231.2
(22) Anmeldetag: 21.01.2010
(51) Int. Cl.: H02K 1/12, H02K 1/22, H02K 15/02

(54) **ELEKTRISCHE MASCHINE**
ELECTRIC MACHINE
MACHINE ÉLECTRIQUE

(30) Priorität: 19.03.2009 DE 102009001650
(43) Veröffentlichungstag der Anmeldung: 25.01.2012
(73) Patentinhaber: Robert Bosch GmbH, 70442 Stuttgart (DE)
(72) Erfinder: KRAUTH, Wolfgang, 77855 Achern-Sasbachried (DE); KOENIG, Tilo, 77815 Buehl (DE)
(86) Internationale Anmeldenummer: PCT/EP2010/050659
(87) Internationale Veröffentlichungsnummer: WO 2010/105866

(56) Entgegenhaltungen:
- DE-A1- 19 947 119
- FR-A- 1 598 097
- JP-A- 60 016 159
- US-A- 5 396 138

## Beschreibung

Die Erfindung betrifft eine elektrische Maschine aufweisend ein Gehäuse, enthaltend einen Rotor und einen Stator, wobei der Rotor und/oder der Stator zumindest ein Blechpaket mit einem im Wesentlichen rechteckförmigen Querschnitt aufweist.

### Stand der Technik

In unterschiedlichsten Bauformen von elektrischen Maschinen werden zur verlustarmen Leitung des magnetischen Flusses Eisenkerne eingesetzt. Dabei treten bei Eisenkernen aus Vollmaterial unter dem Einfluss eines elektrischen Wechselfeldes induktiv erzeugte Wirbelströme auf, die zu einer Erwärmung der elektrischen Maschine führen und weiter nicht nutzbar sind. Um dies zu minimieren, werden Eisenkerne für elektrische Maschinen vorzugsweise aus zueinander elektrisch isolierten Bleche oder als gewickelte Schnittbandkerne ausgeführt. Die isolierten Bleche werden dabei entweder als einzelne, lose Bleche, auch Lamellen genannt, oder als miteinander verbundenes Blechpaket, auch Lamellenpaket genannt, bei der Montage der elektrischen Maschine verbaut.

Durch die Entwicklung bürstenloser Gleichstrommotoren mit Luftspaltwicklung, entwickelte sich die Grundform der Blechpakete mit Polschuhen zu ringförmigen Blechpaketen, die gestapelt einen hohlzylindrischen Körper ausformen. Eingesetzt werden diese Bauformen von Blechpaketen z.B. in elektrischen Maschinen wie sie durch die DE 10 2007 029 739 A1 offenbart sind.

Das Dokument US 5396138 offenbart eine elektrische Maschine mit einem gewickelten Blechpaket.

Zur Herstellung der Blechpakete werden die einzelnen Bleche aus einem Blechstreifen ausgestanzt, zu einem Blechpaket geschichtet und miteinander verbunden. Die Verbindung der Bleche zueinander kann dabei u.a. durch Backlack, Stanzpaketierung oder durch eine Schweißverbindung erfolgen. Insbesondere beim Stanzen von Blechen, welche geschichtet einen Hohlzylinder ergeben, fällt ein hoher Anteil an Verschnitt an. Zur Herstellung der Blechpakete wird aus einem Blechstreifen mit einem um einige Millimeter größerer Breite als der Außendurchmesser des zu stanzenden Blechteils, das Blechteil des Blechpakets ausgestanzt. Beim Ausstanzen des Blechteils fällt sowohl der innere Teil des Blechteils als auch der äußere Teil des Blechteils bzw. die Überreste des Blechstreifens als Verschnitt an. So sind zur Herstellung eines Blechpakets mit einem Gewicht von ca. 190 g mit einem Außendurchmesser von 68 mm und einem Innendurchmesser von 64 mm bei einer Dicke von 0,7 mm ca. 2,2 kg Blech nötig, um das Blechpaket herstellen zu können. Dies entspricht einem Verschnitt von über 90%.

Zur Reduktion des Verschnitts werden bei Transformatoren Schnittbandkerne eingesetzt. Dazu wird ein Blechband auf einem Dorn mit rechtförmigem Querschnitt gewickelt und verklebt. Anschließend wird das gewickelte, verklebte Blechpaket mittig parallel zur Längsachse des Blechpakets zerteilt und die Trennflächen poliert. In die Hälften werden bewickelten Spulen eingesetzt und verklebt. Durch das Zerteilen des Schnittbandkerns, um ihn vom Dorn zu lösen, entstehen beim Aneinanderfügen der beiden Schnittbandkernhälften zwei dünne Luftspalte, welche den magnetischen Fluss zwischen den beiden Schnittbandkernhälften beeinflussen. Aufgrund der zweiteiligen Ausführung des Schnittbandkerns eignet sich dieser insbesondere nicht für den Einsatz in rotierenden elektrischen Maschinen. Vor allen eignet sich der Schnittbandkerne nicht zum Einsatz am Rotor, da hier die Bleche hohen zentrifugalen Kräften ausgesetzt sind. Gegen einen Einsatz am Stator spricht vor allem der Luftspalt und die notwendigen Polierschritte um den Luftspalt zu minimieren. Daher werden in elektrischen Maschinen mit einem Rotor und/oder einem Stator vor allem Blechpakete eingesetzt, bei welchen die einzelnen Bleche mittels Stanzen aus einem Blechstreifen gefertigt werden.

### Offenbarung der Erfindung

Es ist daher Aufgabe der Erfindung, ein Blechpaket für eine elektrische Maschine bereitzustellen, bei welchem in der Herstellung des Blechpakets der Verschnitt minimiert ist, welches einfach herstellbar, in der elektrischen Maschine montierbar ist und welches sowohl auf dem Stator als auch auf dem Rotor einer elektrischen Maschine einsetzbar ist.

Diese Aufgabe wird durch eine elektrische Maschine gemäß Anspruch 1 und durch ein Verfahren gemäß Anspruch 4 gelöst. Bevorzugte Ausführungsformen sind in den abhängigen Ansprüchen angegeben.

Erfindungsgemäß wurde erkannt, dass bei der Herstellung eines Blechpakets mit rechteckförmigem Querschnitt eines Rotors und/oder eines Stators einer elektrischen Maschine, eine hoher Anteil an Material als Verschnitt dadurch vermieden werden kann, indem das Blechpaket einen durchlaufenden Blechstreifen aufweist, der spulenförmig gewickelt einen hohlzylindrischen Körper ausbildet. Auf diese Weise kann das eingesetzte Materialgewicht um etwa eine Größenordnung gegenüber dem eingesetzten Stanzverfahren reduziert werden. Des Weiteren kann der spulenförmig gewickelte Blechstreifen die Montage im Rotor oder Stator erleichtern.

Erfindungsgemäß weist die elektrische Maschine am Stator und/oder am Rotor einen Träger auf, der zumindest eine Aufnahme aufweist und wobei die Vorspannung des gewickelten Blechstreifens des Blechpakets so eingestellt ist, dass das Blechpaket spielfrei in der Aufnahme des Trägers des Stators und/oder des Rotors angeordnet ist. Dies hat den Vorteil, dass das Blechpaket sich selbständig an die Fertigungsmaße des Trägers anpasst.

Erfindungsgemäß ist der Blechstreifen des Blechpakets in axialer Richtung zumindest teilweise mittels Backlack oder mittels einer Schweißverbindung verbunden. Auf diese Weise kann das bewegliche und flexible Blechpaket zu einem festen Gebilde verschmolzen bzw. verschweißt werden.

In einer weiteren Ausführungsform der Erfindung weist der Blechstreifen des Blechpakets ein weichmagnetisches Material auf. Auf diese Weise kann der magnetische Fluss geleitet werden.

Nachfolgend wird die Erfindung anhand von Figuren näher erläutert. Dabei zeigt:
Fig. 1 eine perspektivische Ansicht eines gewickelten Blechstreifens des Blechpakets in auseinandergezogenem gespannten Zustand,
Fig. 2 eine perspektivische Ansicht des gewickelten Blechstreifens des Blechpakets aus Fig. 1 in entspanntem Zustand,
Fig. 3 eine schematische 3D-Darstellung einer erfindungsgemäßen elektrischen Maschine in einer ersten Ausführungsform,
Fig. 4 eine schematische 3D-Darstellung einer elektrischen Maschine, und
Fig. 5 einen Ausschnitt eines Schnittes durch eine elektrische Maschine.

Üblicherweise werden Blechpakete 2 für elektrische Maschinen mittels Stanzen hergestellt. Dabei fällt für die Herstellung von hohlzylindrischen Formen ein hoher Anteil an Material als Verschnitt an. Um die Herstellung ressourcenschonender zu gestalten, wurde erfindungsgemäß das Blechpaket 2 aus einem Blechstreifen 1 spulenförmig gewickelt.

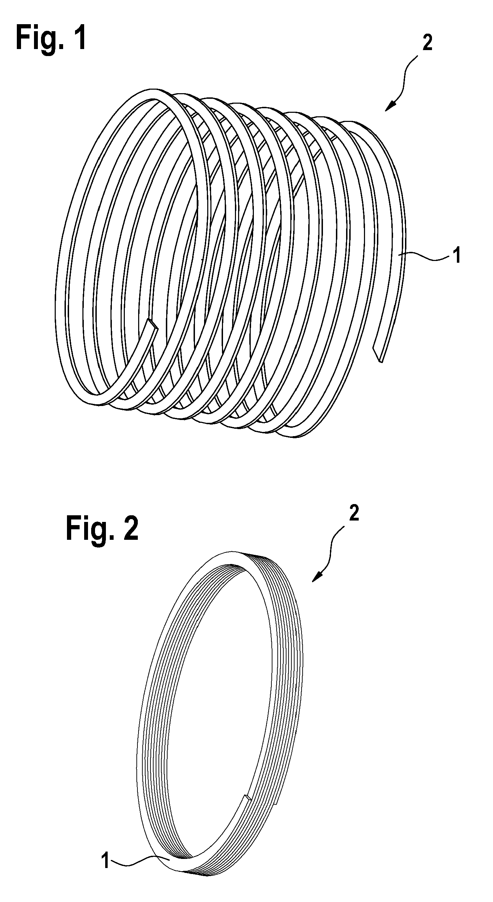

Fig. 1 und 2 zeigen perspektivische Darstellungen eines gewickelten Blechstreifens 1 eines Blechpakets 2 für eine elektrische Maschine. Dabei ist das Blechpaket 2 in Fig. 1 in auseinandergezogenem gespanntem Zustand dargestellt. In entspanntem Zustand ist das Blechpaket 2 in Fig. 2 dargestellt.

Das Blechpaket 2 kann mittels Hochkantrollen hergestellt werden. Hierbei wird ein Blechstreifen 1 um einen Dorn, welcher einen kreisförmigen Querschnitt aufweist, hochkant gewickelt. Dabei entspricht die Anzahl der Wicklungen der herkömmlich verwendeten Anzahl von Blechlagen im Blechpaket 2. Nach dem Entfernen des Dorns weist das einstückige Blechpaket 2 eine hohlzylindrische Grundform auf. Durch die einstückige Ausführung kann das Blechpaket 2 vorkonfektioniert in der Fertigung bereitgehalten werden.

Der Blechstreifen 1 zum Wickeln des Blechpakets 2 weist einen rechteckförmigen Querschnitt auf, wobei der Blechstreifen 1 sowohl scharfkantige oder auch abgerundete Kanten aufweisen kann. Der Blechstreifen 1 besitzt weichmagnetische Eigenschaften, wobei der Blechstreifen 1 ein Material aufweist, das Silizium und/oder Eisen umfasst. Das Material des Blechstreifes entspricht beispielsweise etwa den in den Normen DIN EN 10106: 1996-02 für kaltgewalztes nichtkornorientiertes Elektroblech und -band im schlussgeglühten Zustand oder DIN EN 10107: 2005-10 für kornorientiertes Elektroblech und -band im schlussgeglühten Zustand offenbarten Materialien. Der Blechstreifen 1 des Blechpakets 2 kann auch aus einem Flachdraht gefertigt sein, wobei insbesondere der Werkstoff RSI 24 nach DIN 17405 zur Herstellung des Blechpakets 2 aus einem Flachdraht geeignet ist. Der Blechstreifen 1 kann dabei über eine zusätzliche Beschichtung verfügen, um den Blechstreifen 1 hinsichtlich Korrosionsschutz, Isolation, Wärmefluss, Hitzebeständigkeit oder Schweißbarkeit zu beeinflussen. Als Beschichtungsmaterialien eignen sich insbesondere Kunststoffe, z.B. Kunstharze oder Backlack sowie anorganische Verbindungen. Die aufgetragene Schichtdicke wählt der Fachmann entsprechend des Einsatzzwecks des Blechstreifens 1 des Blechpakets 2. Auf diese Weise können die einzelnen Windungen des Blechstreifens 1 voneinander isoliert werden, so dass sich Wirbelströme nicht über die Kontaktflächen des Blechstreifen 1 ausbreiten können.

Hinsichtlich der Montage des Blechpakets 2 bietet der gewickelte Blechstreifen 1 die Möglichkeit den Innendurchmesser des Blechpakets 2 durch Verdrehung des einen Endes um die Längsachse des Blechpakets 2 gegenüber dem anderen Ende um die Längsachse des Blechpakets 2, wie in Fig. 1 dargestellt, zu vergrößern. Analog dazu kann auch der Außendurchmesser des Blechpakets 2 verringert werden. Dies hat den Vorteil, dass das Blechpaket 2 vorgespannt aufgeweitet in eine Aufnahme einbringbar ist. Die Aufnahme kann dabei eine zylinderähnliche Grundform aufweisen, kann jedoch aber auch tonnenförmig oder rotationssymmetrisch ausgeführt sein. Der Sitz des Blechpakets 2 in der Aufnahme wird durch Entspannen des Blechpakets 2 festgelegt. Dabei legt sich das Blechpaket 2 an die Kontur der Aufnahme an. Ebenso kann der Außendurchmesser des Blechpakets 2 reduziert werden, um das Blechpaket 2 die Aufnahme innenseitig in einen rotationssymmetrischen Körper einzubringen, wobei sich der Außendurchmesser durch Entspannung erweitet und das Blechpaket 2 sich dadurch mit seinen Außenflächen an der Innenkontur der Aufnahme anlegt. Durch eine geeignete Wahl des Innendurchmesser bzw. des Außendurchmessers des gewickelten Blechstreifens 1 des Blechpakets 2 kann das Blechpaket 2 spielfrei in die Aufnahme gebracht werden. Dies hat den Vorteil, dass sich das Blechpaket 2 selbstständig an die Fertigungstoleranzen der Aufnahme anpasst.

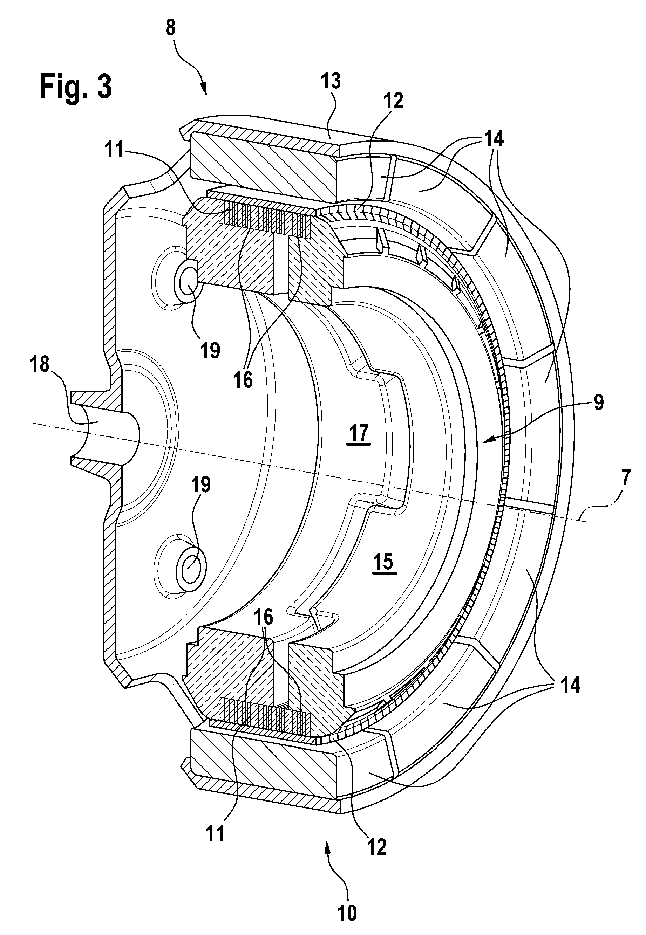

Fig. 3 zeigt eine schematische 3D-Darstellung einer elektrischen Maschine gemäß einer ersten Ausführungsform. Die in einem räumlichen Halbschnitt dargestellte elektrische Maschine ist als bürstenlose Gleichstrommaschine ausgeführt, die einen Rotor 8 aufweist, der als Außenläufer 10 einen Stator 9zumindest teilweise umfasst. Der Rotor 8 weist eine Glocke 13 mit einer mittigen Öffnung 18 zur Aufnahme einer nicht dargestellten Welle auf, welche auf der Rotationsachse 7 liegt. Zur Übertragung des erzeugten Drehmomentes des Außenläufers 10 sind Befestigungsöffnungen 19 in der Glocke vorgesehen, welche in ideale Weise konzentrisch um die Rotorachse 7 angeordnet sind. In der dargestellten Ausführungsform sind drei Befestigungsöffnungen 19 mit einem Winkelvorsatz von 120° um die Rotationsachse 7 vorgesehen, welche konusartige Verstärkungen an ihren Seitenflächen aufweisen, die in den Raum der Glocke 13 des Rotors 8 ragen.

An den Umfangsflächen der zylindrischen Innenkontur der Glocke 13 des Rotors 8 sind innenseitig die Magnete 14 angeordnet. Beispielhaft sind in der dargestellten Ausführungsform des Rotors 8 zwölf Magnete 14 konzentrisch um die Rotorachse 7 angeordnet, wobei durch den Halbschnitt nur sieben zumindest teilweise dargestellt sind. Die Magnete werden in der Regel durch Kleben, Klemmen, Klipsen, umspritzen oder durch eine Kombination dieser befestigt.

Der Stator 9 weist als Träger eine erste Isoliermaske 15 und eine zweite Isoliermaske 17 auf, wobei die beiden Isoliermasken 15, 17 über Ausnehmungen und Erhebungen verfügen. Die Erhebungen und Ausnehmungen wechseln sich in regelmäßigem Winkel über den Verlauf der Seitenflächen der Isoliermasken ab und befinden sich an den jeweils gegenüberliegenden Seitenflächen der beiden Isoliermasken 15, 17. Die Ausnehmungen und Erhebungen sind so ausgebildet, dass jeweils eine Erhebung der ersten Isoliermaske 15 in die gegenüberliegende Ausnehmung der zweiten Isoliermaske 17 greift. Die Ausnehmungen und die Erhebungen ermöglichen eine flexible Anpassung des Trägers an die Dichte eines Blechpakets 11. Nicht dargestellt wird der Stator 9 innenseitig und in der Darstellung rechtsseitig durch ein Befestigungsteil z.B. an einem Fahrzeug befestigt. Dabei eignet sich die Bauweise der in der Ausführungsform beschriebenen elektrischen Maschine z.B. als Gebläsemotor, bei dem das Gebläserad direkt auf der Glocke 13 des Rotors 8 befestigt ist.

Zur Montage eines üblicherweise verwendeten Blechpaketes, welche aus mehreren einzelnen gestanzten Blechen bestehen, ist zum Einbau des Blechpakets die erste Isoliermaske 15 von der zweiten Isoliermaske 17 zu trennen, um die einzelnen Bleche des Blechpakets auf der ersten Isoliermaske 15 oder der zweiten Isoliermaske 17 aufzureihen. Nach dem Aufreihen der Bleche des Blechpakets auf einer der Isoliermasken 15, 17 kann die gegenüberliegende Isoliermaske auf die andere Isoliermaske wieder aufgeschoben werden. Nachteilig ist bei der Montage des Blechpakets insbesondere das einzelne Auffädeln der Bleche auf die Isoliermasken 15, 17 und der hohe Ressourcenbedarf zur Herstellung der einzelnen ringförmigen Bleche aus einem Blechstreifen.

Das Blechpaket 11 ist, ähnlich dem Blechpaket 2 in Fig. 1 und Fig. 2, einstückig aus einem um einen Dorn gewickelten Blechstreifen gefertigt. Das Blechpaket 11 kann in gleicher Art wie das aus einzelnen Blechen bestehende Blechpaket 11 auf eine der getrennten Isoliermasken 15, 17 aufgesteckt werden. Es besteht aber auch die Möglichkeit den Innendurchmesser des Blechpakets 11 durch Verdrehung des einen Endes des Blechpakets 11 gegenüber dem anderen Ende des Blechpakets 11 um die Längsachse des Blechpakets 11 aufzuweiten und das Blechpaket 11 vorzuspannen. Dadurch ist das Blechpaket 11 über die maximalen Abmessungen der Isoliermasken 15, 17 schiebbar. Über die Aufnahme 16 geschoben, kann das Blechpaket 11 durch Entspannen, und damit durch Reduktion des Innendurchmessers des Blechpakets 11 in die Aufnahme 16 eingebracht werden.

Durch die einstückige Ausführung des Blechpakets 11 längt sich das Blechpaket 11 wenn es so gespannt wird, dass sich der Außendurchmesser des Blechpakets 11 reduziert, und verkürzt sich, wenn der Innendurchmesser aufgeweitet wird. In beiden Fällen kehrt das Blechpaket 11 bei einer Verspannung im elastischen Bereich des Werkstoffes des Blechpakets 11 wieder in die ursprüngliche Form zurück und passt sich spielfrei an die Aufnahme an. Auf diese Weise kann das Blechpaket 11 leichter als einzelne Bleche in die Aufnahme 16 der Isoliermasken 15, 17 eingebracht werden.

Nach dem Einbringen des Blechpakets 11 in den Träger kann der Stator 9 bewickelt werden. Das Blechpaket 11 dient als magnetischer Rückschluss für die als Luftspaltwicklung ausgeführte Wicklung 12. Motoren mit Luftspaltwicklung weisen aufgrund des Verzichts von Polschuhen vorteilhafterweise ein sehr geringes Rastmoment auf. Die dargestellten Leitungsbereiche der Wicklung 12 sind so miteinander verbunden und verschaltet, dass durch eine Bestromung mittels Wechselstrom sich ein magnetisches Wechselfeld aufbaut, welches den mit Magneten 14 versehenen Rotor 8 in Drehung versetzt.

Nach dem Aufbringen des Blechpakets 11 kann das Blechpaket zusammen mit dem Träger und gegebenenfalls mit den aufgebrachten Wicklungen 12 erwärmt werden, um das flexibel ausgebildete Blechpaket 11 mittels Backlack zu einem festen Bauteil zu verbacken. Ebenso wäre es denkbar, zumindest teilweise das Blechpaket mittels einer Schweißverbindung zu befestigen.

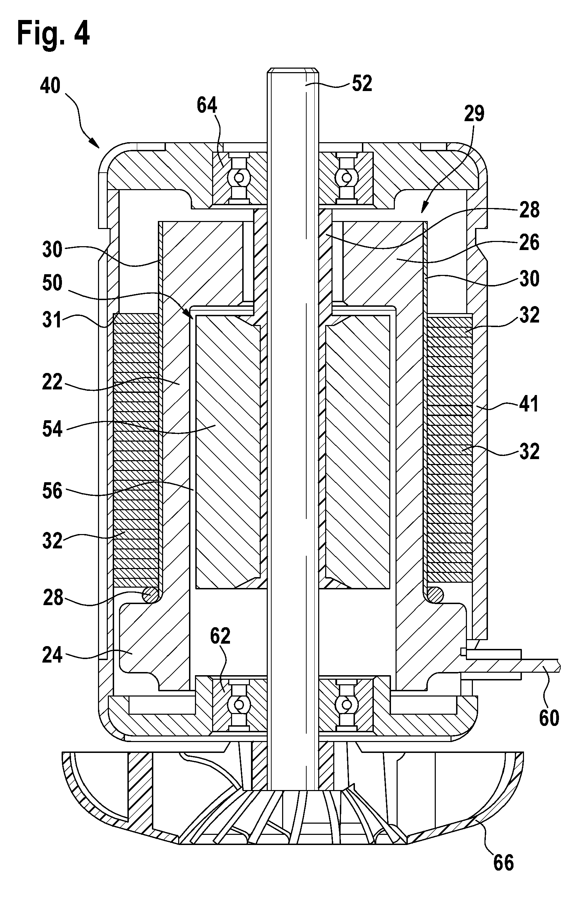

Fig. 4 zeigt einen Längsschnitt durch eine elektrische Maschine 40 mit einem in einem Gehäuse 41 angeordneten Stator 29 und einem als Innenläufer angeordneten Rotor 50. Der Rotor weist eine Rotorwelle 52 auf, auf der zumindest ein Permanentmagnet 54 angeordnet ist. Die Rotorwelle 52 wird durch ein erstes Lager 64 und ein zweites Lager 62 gelagert. Die Lager 62, 64 sind in der Ausführungsform als Wälzlager ausgeführt, wobei aber auch Gleitlager denkbar wären. Zwischen einem Außenumfang des Rotors 50 und einer Innenkontur eines Wickelkörpers 22 des Stators 29 der elektrischen Maschine 40 ist ein Luftspalt 56 ausgebildet. Am Außenumfang des Wickelkörpers 22 ist eine Isolierung 30 aufgebracht, auf welcher ein Blechpaket 32 angeordnet ist. Das Blechpaket 32 besteht dabei aus einem gewickelten Blechstreifen und ersetzt die üblicherweise in axialer Richtung geschichteten Blechringe. Die Herstellung des dargestellten Blechpakets 32 erfolgt in ähnlicher Weise wie das in Fig. 1 und 2 gezeigte Blechpaket 2. Die einzelnen rechteckförmigen Schichten des Blechpakets 2 sind axial durch die Wicklung des Blechstreifens verschoben. Dies hat zur Folge, dass sich kleinere Hohlräume am oberen und unteren Ende des Blechpakets 32 im Bereich der Befestigungspunkte ausbilden können. Das Blechpaket 32 sitzt dabei auf einem Wickelkörper 22 auf, dessen Wicklungen aus einer Vielzahl von Kupferlackdrähten bestehen, die in geeigneter Weise geformt sind.

Der Wickelkörper 22 weist an seinem in der Darstellung unteren Ende eine axiale Erweiterung in Form eines Wickelkopfes 24 auf, welcher in etwa einen Außendurchmesser aufweist, der dem Außendurchmesser des Blechpakets 32 entspricht. An dem entgegengesetzten Ende 26 des Wickelkörpers 22 ist der Wickelkörper 22 radial nach innen ausgeformt, so dass der Wickelkopf 24 glockenförmig mit einem verdickten unteren Rand die Permanentmagneten 54 auf der Rotorwelle 52 umfasst. Über einen elektrischen Anschluss 60 am Wickelkopf 24 kann der Wickelkörper 22 bzw. dessen nicht dargestellte Wickelleitungen bestromt werden.
Zwischen dem Blechpaket 32 und dem Wickelkopf 24 des Wickelkörpers 22 ist ein Fixierring 28 so angeordnet, dass dieser sich in den Radius des Hauptkörpers und des Wickelkopfes 24 schmiegt. Dabei liegt der Fixierring 28 zusätzlich auf der Isolierung 30 auf. Das Blechpaket 32 wird mittels eines Absatzes 31 und mittels des Fixierrings 28 in seiner Position im Gehäuse 41 der elektrischen Maschine 40 gehalten. Dabei ist der Wickelkörper 22 an nicht dargestellten Punkten im Gehäuse 41 befestigt. Die elektrische Maschine 40 weist an einem Ende der Rotorwelle einen Flansch 66 auf, um die Leistung der elektrischen Maschine an ein weiteres nicht dargestelltes Aggregat weiterzugeben.

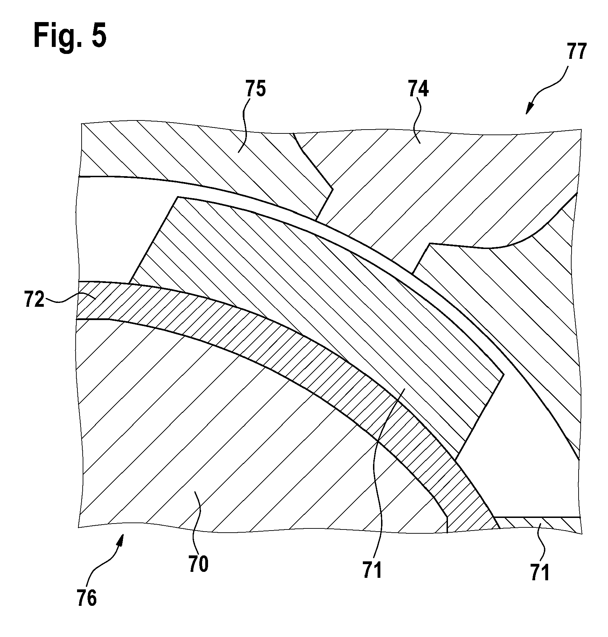

Fig. 5 zeigt einen Querschnitt durch eine elektrische Maschine. Dabei umfasst die elektrische Maschine einen Rotor 76 und einen Stator 77. Der Rotor 76 ist in der Ausführungsform als Innenläufer aufgebaut und der Stator 77 weist einen typischen Polschuhaufbau auf. Der Rotor 76 weist einen Träger 70 auf, der auf einer nicht dargestellten Rotorwelle angeordnet ist. Der Träger 70 wird von einem Blechpaket 72 radial umfasst. Das Blechpaket 72 ist in ähnlicher Art wie das Blechpaket 2 aus Fig. 1 und 2 aus einem Blechstreifen 72, der um einen Dorn gewickelt wird, gefertigt. Als Blechsteifen kann auch aus Flachdraht sein. Das Blechpaket 72 kann durch ein Verdrehen des einen Endes des Blechpakets 72 um die Längsachse des Blechpakets 72 gegenüber dem anderen Ende des Blechpakets 72 gespannt werden, wobei sich dabei der Innendurchmesser des Blechpakets 72 vergrößert. Vorgespannt kann das Blechpaket 72 auf den Träger 70 des Rotors 76 aufgebracht werden und durch eine Entspannung des Blechpakets 71 in seiner Position auf dem Träger 70 fixiert werden. Dabei legt sich das Blechpaket 72 spielfrei an die kreisförmige Außenkontur des Trägers 70 an. Um das Blechpaket 72 zu einem steifen Gebilde auf dem Rotor 76 auszubilden, kann am Blechpaket 72 z. B. durch einzelne Schweißpunkte die aneinanderliegenden Windungen des Blechstreifens miteinander verbunden werden. Es ist aber auch denkbar, den Blechstreifen des Blechpakets 72 mit Backlack zu versehen und den Rotor 76 zusammen mit dem montierten Blechpaket 72 zu erwärmen, damit die einzelnen Windungen des Blechpakets 72 durch den Backlack zu einem festen Gebilde verschmelzen.

Auf dem Blechpaket 72 ist eine Mehrzahl von Permanentmagneten 71 angeordnet, die segmentweise z.B. mit ihrer Unterseite am Träger 70 z.B. durch eine Verklebung befestigt sind. Zur Herstellung von Permanentmagneten 71 werden Legierungen verwendet, die z. B. Eisen, Nickel oder Kobalt enthalten und mit Zusätzen versehen werden können. Die Werkstoffe werden z. B. gesintert und anschließend durch externe Magnetfelder magnetisiert. Durch das unterhalb der Permanentmagneten 71 angeordnete Blechpaket 72 wird der magnetische Rückschluss der Permanentmagnete 71 gewährleistet. Die Permanentmagneten 71 haben beispielhaft einen im Wesentlichen quaderförmigen Querschnitt, wobei ihre Oberseite und Unterseite ringförmig ausgeprägt ist, wobei das Zentrum des Rings auf der Längsachse bzw. der Rotorachse des Rotors 76 liegt. Die Permanentmagnete 71 sind innerhalb des Rotors 76 so angeordnet, dass ihre Oberflächen auf einem konzentrischen Kreis um die Rotorachse einzelne regelmäßige Abschnitte bedecken.

Dem Fachmann ist selbstverständlich geläufig, dass die Erfindung nicht auf die dargestellten Ausführungsbeispiele beschränkt ist. Vielmehr ist das aus einem gewickelten Blechstreifen gefertigte Blechpaket überall dort in einer elektrischen Maschine einsetzbar, wo bisher scheibenartige, hohlzylindrische Bleche bzw. Blechpakete eingesetzt werden, um den magnetischen Fluss innerhalb der elektrischen Maschine zu leiten.

## Patentansprüche

1. Elektrische Maschine aufweisend einen Rotor (8; 50; 76) und einen Stator (9; 29; 77), wobei der Rotor (8; 50; 76) und/oder der Stator (9; 29; 77) zumindest ein Blechpaket (2; 11; 32; 72) mit einem im Wesentlichen rechteckförmigen Querschnitt aufweist, wobei das Blechpaket (2; 11; 32; 72) einen Blechstreifen (1) aufweist, der spulenförmig hochkant gewickelt ist, und wobei der Stator (9; 29; 77) und/oder der Rotor (8; 50; 76) einen Träger (15, 17; 70) aufweisen, wobei die Vorspannung des gewickelten Blechstreifens (1) so eingestellt ist, dass das Blechpaket (2; 11; 32; 72) nach einer Entspannung des Blechstreifens (1) spielfrei in einer Aufnahme (16) des Träger (15, 17; 70) des Stators (9; 29; 77) und/oder des Rotors (8; 50; 76) angeordnet ist,
wobei der Blechstreifen (1) des Blechpakets (2; 11; 32; 72) in axialer Richtung zumindest teilweise mittels Backlack oder mittels einer Schweißverbindung verbunden ist,
**dadurch gekennzeichnet, dass** die Kontur der Aufnahme (16) einen gegenüber dem Träger (15, 17; 70) kleineren Durchmesser aufweist.

2. Elektrische Maschine nach Anspruch 1, **dadurch gekennzeichnet, dass** das Blechpaket (2; 11; 32; 72) einstückig ausgeführt ist.

3. Elektrische Maschine nach einem der vorherigen Ansprüche, **dadurch gekennzeichnet, dass** der Blechstreifen (1) ein weichmagnetisches Material aufweist.

4. Verfahren zur Herstellung eines Blechpakets (2; 11; 32; 72) für einen Rotor (8; 50; 76) und/oder einen Stator (9; 29; 77) einer elektrischen Maschine, wobei der Stator (9; 29; 77) und/oder der Rotor (8; 50; 76) einen Träger (15, 17; 70) mit einer Aufnahme (16) für das Blechpaket (2; 11; 32; 72) aufweisen und wobei die Aufnahme (16) einen gegenüber dem Träger (15, 17; 70) kleineren Durchmesser aufweist, **gekennzeichnet durch** die Schritte:
- Hochkantwickeln eines Blechstreifens (1),
- Vorspannen des gewickelten Blechstreifens (1) des Blechpakets (2; 11; 32; 72) **durch** Verdrehung eines Endes des Blechstreifens (1) um eine Längsachse des Blechpakets (2; 11; 32; 72) gegenüber dem anderen Ende des Blechstreifens (1),
- Einbringen des vorgespannten Blechstreifens (1) des Blechpakets (2; 11; 32; 72) in die elektrische Maschine,
- Entspannen des gewickelten Blechstreifens (1) des Blechpaket (2; 11; 32; 72), wodurch sich das Blechpaket (2; 11; 32; 72) spielfrei an der Aufnahme (16) des Trägers (15, 17; 70) anlegt und
- Erwärmen der zumindest teilweise mittels Backlack beschichteten Blechstreifen (1) oder teilweises Verschweißen der Blechstreifen (1) zur Verbindung aneinanderliegender Bereiche des Blechpakets (2; 11; 32; 72) in axialer Richtung.

5. Verfahren nach Anspruch 4, **dadurch gekennzeichnet, dass** der Blechstreifen (1) weichmagnetische Eigenschaften aufweist.

## Claims

1. Electrical machine having a rotor (8; 50; 76) and a stator (9; 29; 77), wherein the rotor (8; 50; 76) and/or the stator (9; 29; 77) has at least one laminated core (2; 11; 32; 72) having a substantially rectangular cross section, wherein the laminated core (2; 11; 32; 72) has a sheet-metal strip (1) which is wound on edge in the form of a coil, and wherein the stator (9; 29; 77) and/or the rotor (8; 50; 76) have a support (15, 17; 70), wherein the prestress of the wound sheet-metal strip (1) is set such that the laminated core (2; 11; 32; 72) is arranged without play in a receptacle (16) of the support (15, 17; 70) of the stator (9; 29; 77) and/or of the rotor (8; 50; 76) after the sheet-metal strip (1) is relieved of stress, wherein the sheet-metal strip (1) of the laminated core (2; 11; 32; 72) is connected in the axial direction at least partially by means of baked enamel or by means of a weld connection, **characterized in that** the contour of the receptacle (16) has a smaller diameter than the support (15, 17; 70).

2. Electrical machine according to Claim 1, **characterized in that** the laminated core (2; 11; 32; 72) is of integral design.

3. Electrical machine according to either of the preceding claims, **characterized in that** the sheet-metal strip (1) comprises a soft-magnetic material.

4. Method for producing a laminated core (2; 11; 32; 72) for a rotor (8; 50; 76) and/or a stator (9; 29; 77) of an electrical machine, wherein the stator (9; 29; 77) and/or the rotor (8; 50; 76) have a support (15, 17; 70) with a receptacle (16) for the laminated core (2; 11; 32; 72), and wherein the receptacle (16) has a diameter which is smaller than the support (15; 17; 70), **characterized by** the steps of:
- winding a sheet-metal strip (1) on edge,
- prestressing the wound sheet-metal strip (1) of the laminated core (2; 11; 32; 72) by twisting one end of the sheet-metal strip (1) about a longitudinal axis of the laminated core (2; 11; 32; 72) towards the other end of the sheet-metal strip (1),
- inserting the prestressed sheet-metal strip (1) of the laminated core (2; 11; 32; 72) into the electrical machine,
- relieving the wound sheet-metal strip (1) of the laminated core (2; 11; 32; 72) of stress, as a result of which the laminated core (2; 11; 32; 72) bears against the receptacle (16) of the support (15, 17; 70) without play, and
- heating the sheet-metal strips (1) which are at least partially coated by means of baked enamel or partially welding the sheet-metal strips (1) for connecting adjoining regions of the laminated core (2; 11; 32; 72) in the axial direction.

5. Method according to Claim 4, **characterized in that** the sheet-metal strip (1) has soft-magnetic properties.

## Revendications

1. Machine électrique comportant un rotor (8 ; 50 ; 76) et un stator (9 ; 29 ; 77), dans laquelle le rotor (8 ; 50 ; 76) et/ou le stator (9 ; 29 ; 77) comportent au moins un noyau feuilleté (2 ; 11 ; 32 ; 72) ayant une section transversale sensiblement rectangulaire, dans laquelle le noyau feuilleté (2 ; 11 ; 32 ; 72) comporte un feuillard (1) qui est enroulé sur la tranche en forme de bobine et dans lequel le stator (9 ; 29 ; 77) et/ou le rotor (8 ; 50 ; 76) comportent un support (15, 17 ; 70), dans lequel la tension préalable du feuillard enroulé (1) est réglée de manière à ce que le noyau feuilleté (2 ; 11 ; 32 ; 72) soit disposé sans aucun jeu après le relâchement du feuillard (1) dans un évidement (16) du support (15, 17 ; 70) du stator (9 ; 29 ; 77) et/ou du rotor (8 ; 50 ; 76),
dans laquelle le feuillard (1) du noyau feuilleté (2 ; 11 ; 32 ; 72) est relié au moins partiellement dans la direction axiale au moyen d'un émail ou au moyen d'un joint soudé,
**caractérisé en ce que** le contour de l'évidement (16) présente un diamètre inférieur à celui du support (15, 17 ; 70).

2. Machine électrique selon la revendication 1, **caractérisée en ce que** le noyau feuilleté (2 ; 11 ; 32 ; 72) est réalisé en une seule pièce.

3. Machine électrique selon l'une quelconque des revendications précédente, **caractérisée en ce que** le feuillard (1) comporte un matériau magnétique doux.

4. Procédé de fabrication d'un noyau feuilleté (2 ; 11 ; 32 ; 72) destiné à un rotor (8 ; 50 ; 76) et/ou à un stator (9 ; 29 ; 77) d'une machine électrique, dans lequel le stator (9 ; 29 ; 77) et/ou le rotor (8 ; 50 ; 76) comportent un support (15, 17 ; 70) muni d'un évidement (16) destiné au noyau feuilleté (2 ; 11 ; 32 ; 72) et dans lequel l'évidement (16) présente un diamètre inférieur à celui du support (15, 17 ; 70), **caractérisé par** les étapes consistant à :
- enrouler sur la tranche un feuillard (1),
- soumettre à une tension préalable le feuillard enroulé (1) du noyau feuilleté (2 ; 11 ; 32 ; 72) en soumettant à une torsion une extrémité du feuillard (1) autour d'un axe longitudinal du noyau feuilleté (2 ; 11 ; 32 ; 72) par rapport à l'autre extrémité du feuillard (1),
- introduire le feuillard (1) soumis à une torsion préalable du noyau feuilleté (2 ; 11 ; 32 ; 72) dans la machine électrique,
- relâcher le feuillard (1) enroulé du noyau feuilleté (2 ; 11 ; 32 ; 72), d'où il résulte que le noyau feuilleté (2 ; 11 ; 32 ; 72) est disposé sans aucun jeu sur un évidement (16) du support (15, 17 ; 70) et
- chauffer le feuillard (1) au moins partiellement revêtu d'émail ou souder partiellement le feuillard (1) afin de relier entre elles des zones du noyau feuilleté (2 ; 11 ; 32 ; 72) dans la direction axiale.

5. Procédé selon la revendication 4, **caractérisé en ce que** le feuillard (1) présente des propriétés magnétiques douces.
